# EUROPÄISCHE PATENTSCHRIFT

(11) **EP 1 600 659 B1**
(45) Veröffentlichungstag und Bekanntmachung des Hinweises auf die Patenterteilung: **23.09.2009**
(21) Anmeldenummer: 05007499.6
(22) Anmeldetag: 06.04.2005
(51) Int. Cl.: F16F 9/096, B60G 11/30

(54) **Feder-Dämpfer-Einheit für ein Fahrwerk eines Kraftfahrzeuges**
Spring and damper unit for a chassis of an automotive vehicle
Combiné ressort et amortisseur pour un châssis de véhicule automobile

(30) Priorität: 28.05.2004 DE 102004027885
(43) Veröffentlichungstag der Anmeldung: 30.11.2005
(73) Patentinhaber: Dr. Ing. h.c. F. Porsche Aktiengesellschaft, 70435 Stuttgart (DE)
(72) Erfinder: Schulz, Achim, Dr., 75223 Niefern-Öschelbronn (DE); Stamm, Andre, 5231 Schalchen (AT)

(56) Entgegenhaltungen:
- DE-A1- 4 226 754
- DE-C1- 19 630 442
- US-A- 4 478 431
- US-A- 5 624 105
- US-A1- 2003 075 402

## Beschreibung

Die Erfindung betrifft eine Feder - Dämpfer - Einheit für ein Fahrwerk eines Kraftfahrzeuges, mit einer hydraulischen Gebereinrichtung, die ein Rad gegenüber einer Karosserie des Fahrzeuges abstützt, und mit einer hydraulischen Nehmereinrichtung, die außerhalb des Fahrwerkes im Kraftfahrzeug angeordnet und über hydraulische Leitungen mit der Gebereinrichtung verbunden ist, wobei die Nehmereinrichtung durch eine Tragfeder abgestützt ist, und wobei eine Dämpfungsvorrichtung in der Gebereinrichtung vorgesehen ist.

Feder - Dämpfer - Einheiten werden in vielfältigen Ausführungen in Kraftfahrzeugen verbaut. Wenn sie in McPherson - Bauart eingesetzt sind, übernehmen sie zusätzlich Aufgaben der Radführung.

Aus der US 4,478,431 ist ein Federungssystem für Fahrzeuge bekannt, mit dem eine vornehmlich lastabhängig veränderliche Dämpfung erreichbar ist. Die Federung gemäß der US 4,478,431 umfasst einen Verdränger in Dämpferbauart, bei dem die Kolbenstange als der eigentliche Verdränger dient. Im Kolben ist eine Drossel für die Grunddämpfung vorgesehen. Diese Drossel kann aus federbelasteten Ventilen für die Raddämpfung in Verbindung mit einer Konstantöffnung bestehen, die so groß bemessen ist, dass eine ausreichende Aufbaudämpfung bei leerem Fahrzeug sichergestellt ist. Das von der Kolbenstange beim Einfedern verdrängte Ölvolumen wird in zwei Volumenströme aufgeteilt, von denen der eine einer ersten Feder und der andere einer zweiten Feder zugeleitet wird.

Aus der US 2003/0075402 A1 ist ein rückwärtiger Stoßdämpfer für ein Fahrrad bekannt, wobei der Stoßdämpfer sowohl als Radaufhängungsfeder als auch als Dämpfer dient. Der Hauptkörper des Stoßdämpfers ist über einen Hydraulikschlauch mit einem Reservebehälter verbunden.

Beispielsweise von Wettbewerbsfahrzeugen ist es ferner bekannt, so genannte Push Rod - Einrichtungen vorzusehen, bei der die im Fahrwerk auftretenden Stützkräfte über ein Hebelwerk auf eine innerhalb der Fahrzeugkarosserie angeordnete Feder - Dämpfer - Einheit weitergeleitet werden.

Hiervon ausgehend ist es Aufgabe der Erfindung, die Bauraumvorteile der aus den Wettbewerbsfahrzeugen bekannten Anordnung auch bei Serienfahrzeugen einsetzbar zu machen.

Diese Aufgabe wird erfindungsgemäß mit den Merkmalen des Patentanspruches 1 gelöst. Es wird vorgeschlagen, das Fahrwerk über eine hydraulische Gebereinrichtung gegenüber der Karosserie abzustützen und außerhalb des Fahrwerkes im Kraftfahrzeug eine hydraulische Nehmereinrichtung vorzusehen, die mit der Gebereinrichtung durch hydraulische Leitungen verbunden ist. Die Nehmereinrichtung stützt sich an einer Tragfeder ab, während eine Dämpfungsvorrichtung in der Gebereinrichtung vorgesehen ist. In vorteilhafter Weise wird durch diese Anordnung Bauraum im Bereich des Fahrwerkes geschaffen, da die voluminös bauende Tragfeder nun innerhalb des Fahrzeuges frei angeordnet werden kann. Da die Dämpfungsvorrichtung in der Gebereinrichtung vorgesehen ist, können hierfür bewährte und kostengünstige Dämpfungsmittel verwendet werden. Darüber hinaus ergibt sich bei dieser Anordnung der Vorteil, dass die Dämpfungskräfte weiterhin unmittelbar am Fahrwerk ohne Zwischenschaltung von weiteren Elementen wie hydraulischen Leitungen aufgebracht werden. Bei der Tragfeder hingegen ist das Vorschalten einer hydraulischen Leitung, die zusätzliche Elastizitäten in das System einbringt, unproblematisch, da es sich hierbei um eine einfache Reihenschaltung zweier Federn handelt, die bei der Auslegung ohne Probleme berücksichtigt werden kann. Gemäß Patentanspruch 1 besteht die Nehmereinrichtung aus einem Teleskopzylinder, der außenseits auf einem Teleskopteil die Tragfeder trägt, wobei sich der Teleskopzylinder und die Tragfeder an der Innenseite eines Rahmens abstützen. Der Rahmen kann als Strukturbauteil des Fahrzeuges, beispielsweise als Domstrebe, verwendet sein.

Die der Erfindung zugrunde liegende Aufgabe wird auch gelöst durch die Merkmale des Patentanspruchs 2, wobei die Nehmereinrichtung aus einem Teleskopzylinder besteht, dessen Teleskopteile sich über wenigstens eine als Drehstabfeder ausgebildete Drehfeder abstützen. Hierzu können beispielsweise zwei parallel angeordnete Drehfedern vorgesehen sein, an deren freien Enden jeweils ein Teleskopzylinder über Hebel angreift, während die gegenüberliegenden Enden der Drehfedern drehfest eingespannt sind. Oder es ist eine Drehfeder vorgesehen, die einerseits an einem Bauteil drehfest eingespannt ist, während andererseits der Teleskopzylinder über einen Hebel an der Drehfeder angreift und sich der Teleskopzylinder ebenfalls an dem Bauteil abstützt. Diese Lösung zeichnet sich durch einen geringen Bauraumbedarf und gut zugängliche Komponenten aus, wobei letzteres Wartungsarbeiten vereinfacht. Durch eine Anordnung der Nehmereinrichtungen an einem Fahrschemel kann auch hier der Schwerpunkt sehr niedrig gehalten werden.

Vorteilhafte Weiterbildungen der Erfindung sind in den Unteransprüchen beschrieben.

So wird vorgeschlagen, zusätzlich zur Tragfeder eine Zusatzfeder vorzusehen. Dieser Zusatzfeder kommt die Aufgabe zu, die Hydraulikflüssigkeit auch beim Ausfedern des Fahrwerkes stets unter Druck zu halten. Hierzu kann die Zusatzfeder einerseits in Reihe zur Tragfeder geschaltet sein. So kann zwischen der Tragfeder und der Anlagefläche der Tragfeder eine Zusatzfeder wesentlich geringerer Federsteifigkeit vorgesehen sein, die im Normalbetrieb, d. h. insbesondere bei statischer Last und beim Einfedern, auf Block liegt und damit wirkungslos ist. Die Zusatzfeder wirkt erst bei vollständiger Entspannung der Tragfeder und baut in diesem Falle über die Nehmereinrichtung noch einen positiven Mindestdruck in der Hydraulikflüssigkeit auf. Alternativ kann es vorgesehen sein, die Zusatzfeder parallel zur Tragfeder vorzusehen. Vorzugsweise ist in diesem Fall die Zusatzfeder in einer eigenen Nehmereinrichtung angeordnet, die direkt mit der hydraulischen Leitung oder unmittelbar mit der Gebereinrichtung verbunden ist. Auch hier ist die Wirkungsweise die selbe: die Zusatzfeder ist im Normalbetrieb auf Block und wird erst wirksam, wenn der Druck der Hydraulikflüssigkeit unter einen Mindestwert fällt. Die Zusatzfeder kann insbesondere als Stahlfeder oder als Gasfeder ausgeführt sein.

Von besonderem Vorteil ist es, wenn die Nehmereinrichtung in ein bestehendes Fahrzeugbauteil integriert ist. Hiermit sind weitere Gewichts- und Bauraumvorteile erzielbar. Besonders geeignet für eine solche Integration sind lang gestreckte Fahrzeugbauteile wie Träger oder Streben. So kann die Nehmereinrichtung im Querträger eines Fahrschemels integriert sein, so dass auf diese Weise die akustische Isolation gegenüber der Karosserie bereits durch die Lagerung des Fahrschemels realisiert ist. Zudem ergeben sich Vorteile im Hinblick auf die Montage, da der komplette Fahrschemel mit Feder - Dämpfer - Einheit und hydraulischen Leitungen vormontierbar ist. Auch die tiefe Anordnung der Nehmereinrichtung in Bezug auf den Gesamtschwerpunktes des Fahrzeuges ist von Vorteil.

Als Alternative ist es beispielsweise möglich, die Nehmereinrichtung in einer Domstrebe zu integrieren. Domstreben stützen den Anlenkpunkt der Gebereinrichtung an der Karosserie in versteifender Weise ab und tragen somit zur Erhöhung der Rohbausteifigkeit des Fahrzeuges bei. Die Vorteile bei dieser Anordnung liegen in vermindertem Bauraum, vermindertem Gewicht und in der kurzen Leitungslänge für die Verbindung zwischen Gebereinrichtung und Nehmereinrichtung. Bestehende Fahrwerke können größten Teils übernommen werden, weil die Nehmereinrichtung außerhalb des Fahrwerks angeordnet ist, so dass eine konstruktive Umsetzung einfach möglich ist. Hervorzuheben ist schließlich der leichte Zugang zu den oben im Bereich des Vorderwagens liegenden Nehmereinrichtungen, der eventuelle Wartungsarbeiten vereinfacht.

Die Gebereinrichtung besteht vorzugsweise aus einem Geberzylinder mit Kolben und hohler Kolbenstange, wobei im Kolben an sich bekannte hydraulische Dämpfungsmittel vorgesehen sind. Vorzugsweise ist es vorgesehen, dass ein Strömungsquerschnitt der hohlen Kolbenstange weniger als die Hälfte des Querschnittes des Zylinder beträgt. Damit ist der Strömungsquerschnitt, der für die Dämpfungsfunktion zur Verfügung steht, größer als der Strömungsquerschnitt, der für die Funktion als Gebereinrichtung zur Verfügung steht.

Die Nehmereinrichtung besteht vorzugsweise aus einem Zylinder, in dem durch einen Kolben ein Druckraum gebildet ist. Der Kolben stützt sich an seiner dem Druckraum gegenüberliegenden Seite durch die Tragfeder ab. Der Zylinder kann als Strukturbauteil des Fahrzeuges, beispielsweise als Querträger, verwendet sein.

Die vorbeschriebenen Varianten der Nehmereinrichtung gelten für alle Nehmereinrichtungen, d.h. für Nehmereinrichtungen mit Tragfeder, für Nehmereinrichtungen mit Zusatzfeder und für Nehmereinrichtungen mit Trag- und Zusatzfeder.

Ausführungsbeispiele der Erfindung sind in den nachfolgenden Figuren dargestellt. Es zeigen:
- Fig. 1: eine Feder - Dämpfer - Einheit eines Fahrzeuges in einer Schemadarstellung,
- Fig. 2: einen Hauptschnitt durch eine Gebereinrichtung,
- Fig. 3: eine erste Variante zur Anordnung der Nehmereinrichtung,
- Fig. 4: einen Schnitt durch die Nehmereinrichtung nach Fig. 3,
- Fig. 5: eine zweite Variante zur Anordnung der Nehmereinrichtung,
- Fig. 6: einen Schnitt durch die Nehmereinrichtung nach Fig. 5, und
- Fig. 7: eine dritte Variante zur Anordnung der Nehmereinrichtung.

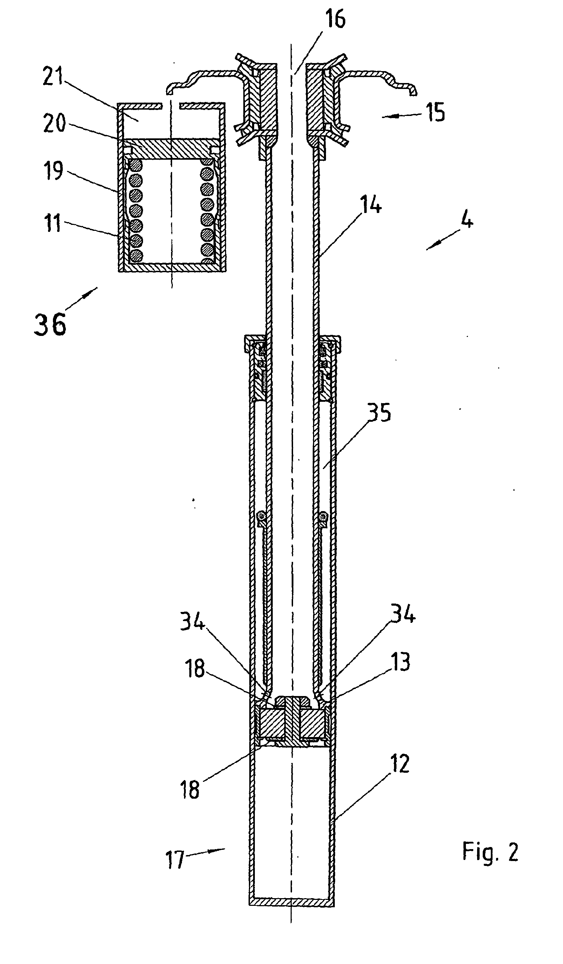

Ein nur schematisch dargestellte Feder-Dämpfer-Einheit 1 eines nicht näher gezeigten Kraftfahrzeuges besteht aus einer mit einem Rad 3 verbundenen hydraulische Gebereinrichtung 4 und einer hydraulischen Nehmereinrichtung 5, die an einer Karosserie 2 gehalten ist. Die Nehmereinrichtung 5 ist über eine hydraulische Leitung 7 mit der Gebereinrichtung 4 verbunden. Mit der Leitung 7 ist schließlich noch ein Regelanschluss 6 verbunden, über den Hydraulikflüssigkeit zu- oder abgeführt werden kann. Die Menge der Hydraulikflüssigkeit beeinflusst unter anderem das Höhenniveau des Kraftfahrzeuges über einer Fahrbahn.
Die Gebereinrichtung weist einen Zylinder 12 und einen hierin geführten Kolben 13 (siehe Fig. 2) auf, wobei der Kolben 13 (siehe Fig. 2) mit Dämpfungseinrichtungen versehen ist.

In der hydraulischen Nehmereinrichtung 5 ist in einem Teleskopzylinder 8 ein Druckraum 9 gebildet, der mit der hydraulische Leitung 7 verbunden und mit Hydraulikflüssigkeit gefüllt ist. Der Teleskopzylinder 8 ist durch eine Tragfeder 10 in einem geschlossenen Rahmen abgestützt, wobei die Tragfeder 10 so ausgelegt ist, dass sie die von der Gebereinrichtung 4 aufgenommenen Stützkräfte beim Betrieb des Kraftfahrzeuges 1 aufnehmen kann. In Reihe zur Tragfeder 10 ist eine Zusatzfeder 11 vorgesehen. Die Federsteifigkeit der Zusatzfeder 11 ist so gewählt, dass sich diese im Normalbetrieb, d. h. insbesondere bei statischer Last und beim Einfedern, auf Block gesetzt ist.

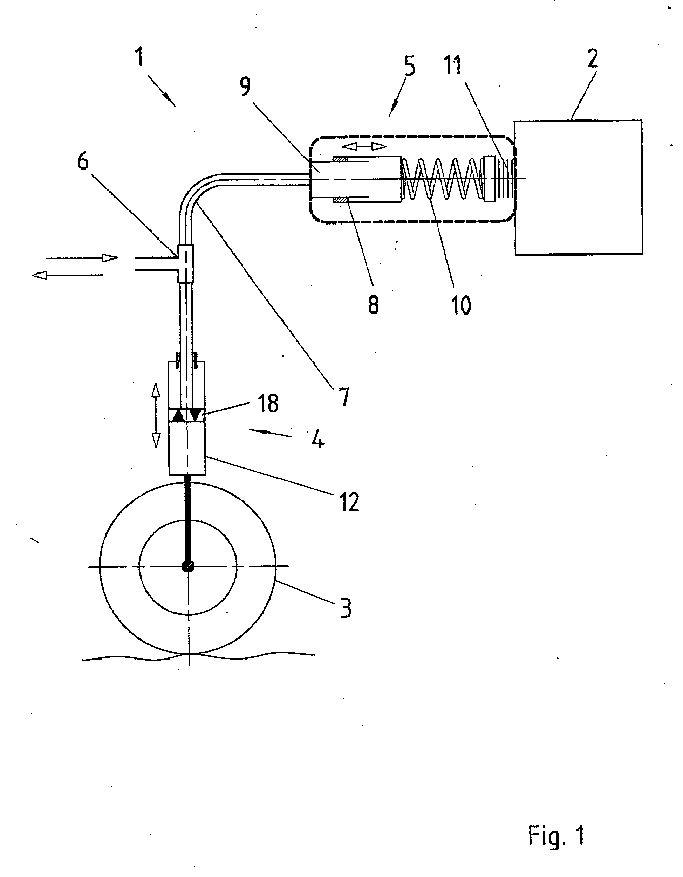

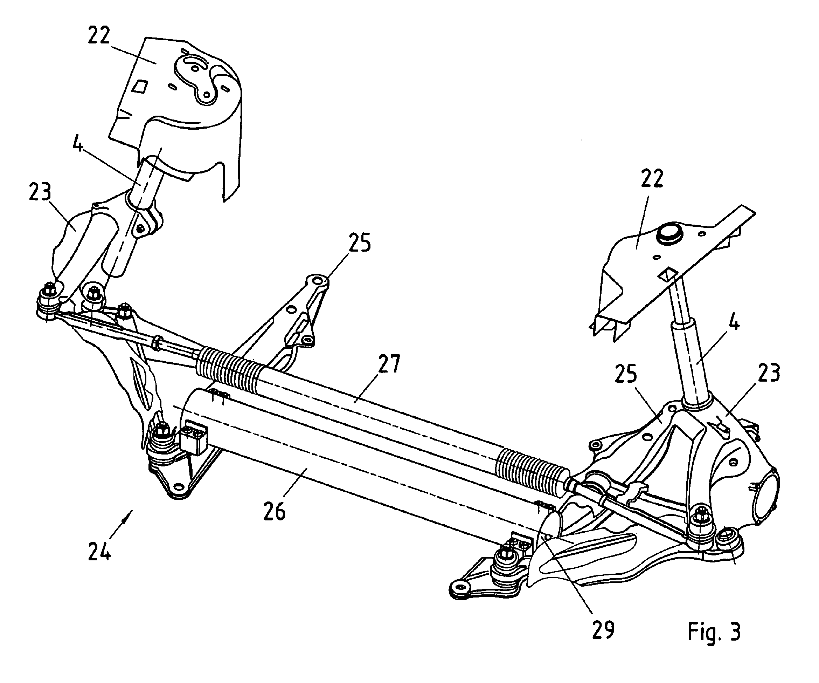

Fig. 2 zeigt in einem Hauptschnitt die Gebereinrichtung 4. Diese besteht aus einem Zylinder 12, einem hierin geführten Kolben 13 und einer mit dem Kolben 13 verbundenen, hohlen Kolbenstange 14. In der Kolbenstange 14 sind endseits eine Lageraufnahme 15 und ein Anschluss 16 für die hydraulische Leitung 7 (siehe Fig. 1) vorgesehen. Das gegenüberliegende Ende 17 der Gebereinrichtung 4 ist an einem Radträger 23 (siehe Fig. 3) eingespannt, wie dies bei McPherson-Achsen üblich ist.

Der Kolben 13 ist mit Dämpfungseinrichtungen 18 versehen, die hier als richtungsabhängige Drosseln ausgebildet sind. Bei der Bewegung des Kolbens 13 im Zylinder 12 wird das dem Querschnitt der Kolbenstange 14 entsprechende Volumen verdrängt bzw. hinzugefügt, so dass sich ein hydraulischer Volumenstrom durch die hohle Kolbenstange 14 und die Hydraulikleitung 7 (siehe Fig. 1) in die Nehmereinrichtung 5 (siehe Fig. 1) ergibt. Da der Kolben 13 trichterförmig ausgebildet ist, sind Bypassbohrungen 34 vorgesehen, durch die der Teil der Hydraulikflüssigkeit, der nicht in die hohle Kolbenstange 14 abfließt, von einer oberen Kammer 35 des Zylinders 12 aufgenommen werden kann. Der hydraulische Volumenstrom durch die hohle Kolbenstange 14 wird in der Nehmereinrichtung in der Druckkammer 9 wirksam und bewirkt über den Teleskopzylinder 8 eine Veränderung der Länge der Tragfeder 10. Hierdurch ändert sich die von der Tragfeder 10 auf den Teleskopzylinder ausgeübte Kraft 8 und damit der Druck in der Hydraulikflüssigkeit, der wiederum an der Gebereinrichtung 4 über die Querschnittsfläche der Kolbenstange 14 eine Kraft aufbaut, die zwischen der Lageraufnahme 15 und dem eingespannten Ende 17 der Gebereinrichtung 4 und somit zwischen dem Rad 3 (siehe Fig. 1) und der Karosserie 2 (siehe Fig. 1) als Stützkraft wirksam wird.

Fig. 2 zeigt gleichzeitig eine Ausbildung der Nehmereinrichtung, bei der die Zusatzfeder 11 in einer zusätzlichen, zweiten Nehmereinrichtung 36 angeordnet ist. Die zweite Nehmereinrichtung 36 ist beispielsweise unmittelbar an der Gebereinrichtung 4 gehalten und besteht aus einem Zylinder 19 und einem hierin geführten Kolben 20, der einen Druckraum 21 gegenüber der Zusatzfeder 11 abgrenzt. Der Druckraum 21 ist mit der Hydraulikleitung 7 verbunden. Auch die erste Nehmereinrichtung 5 (siehe Fig. 1) kann derart ausgebildet sein.

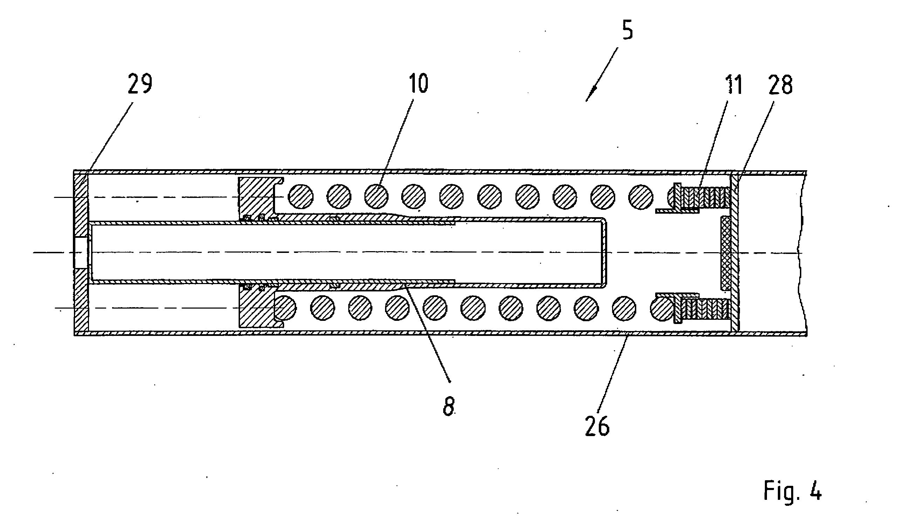

Fig. 3 zeigt in Verbindung mit Fig. 4 eine erste Variante zur Anordnung der Nehmereinrichtung im Kraftfahrzeug. Die Feder-Dämpfer-Einheit 1 ist hier in McPherson - Bauweise ausgeführt, d. h. die Gebereinrichtung 4 übernimmt auch Führungsaufgaben für das Rad 3 (siehe Fg. 1), Während die Gebereinrichtungen 4 direkt in Domen 22 der Karosserie 2 aufgenommen sind und so die Radträger 23 abstützen, sind weitere Elemente des Fahrwerkes an einem Fahrschemel 24 gelagert, der seinerseits elastisch gegenüber der Karoserie 2 (siehe Fig. 1) abgestützt ist. Der Fahrschemel 24 besteht aus zwei Längsträgern 25 sowie einem Querträger 26. Am Querträger 26 ist weiterhin ein Lenkgetriebe 27 befestigt.

Der Querträger 26 dient hier, wie in Fig. 4 gezeigt, als Gehäuse für zwei Nehmereinrichtungen, wobei für jede Gebereinrichtung 4 eine korrespondierende Nehmereinrichtung vorgesehen ist. In Fig. 4 ist nur eine Nehmereinrichtung 5 dargestellt. Innerhalb des Querträgers 26 stützt sich der Teleskopzylinder 8 an der Tragfeder 10 ab, der die Zusatzfeder 1 in Reihe nachgeschaltet ist. Die Zusatzfeder 11 liegt an einer mittig im Querträger 26 angebrachten Trennwand 28 an. Der Teleskopzylinder 8 stützt sich an einer Verschlussplatte 29 des Querträgers 26 ab und ist mit der korrespondierenden Gebereinrichtung 4 über die hier nicht gezeigte hydraulische Leitung 7 verbunden.

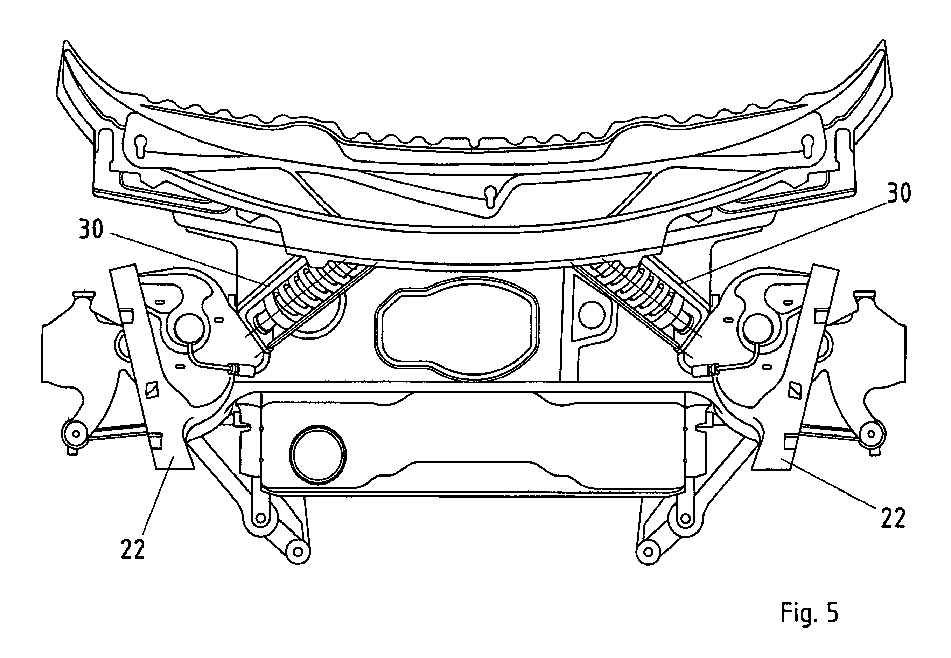

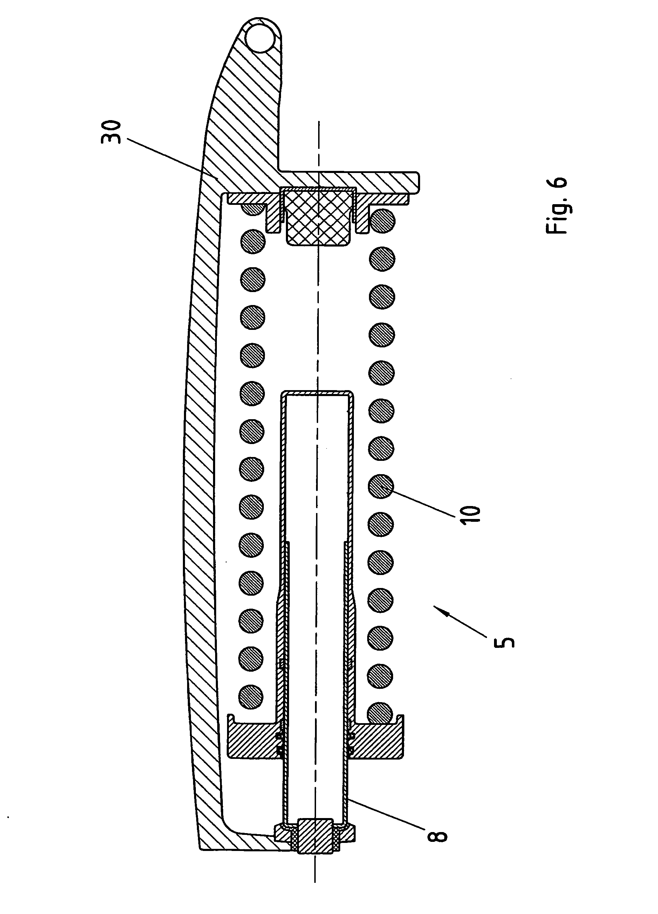

Fig. 5 zeigt eine zweite Variante zur Anordnung der Nehmereinrichtung 5 (siehe Fig. 1 und 6) in einer Ansicht von oben. Die Dome 22 sind über Domstreben 30 abgestützt. Jede der Domstreben 30 nimmt eine in Fig. 5 nicht näher dargestellte Nehmereinrichtung auf. Dabei sind beiden den Nehmereinrichtungen die Tragfedern außen auf dem Teleskopzylinder gehalten, siehe-Fig. 6.

Wie in Fig. 6 schematisch dargestellt ist zur Aufnahme des Teleskopzylinders 8 und der Tragfeder 10 die Domstrebe 30 als Rahmen ausgebildet. Die hydraulischen Leitungen 7 (siehe Fig. 1) zwischen den Gebereinrichtungen 4 (siehe Fig. 1 und 2) und den korrespondierenden Nehmereinrichtungen 5 sind in Fig. 6 nicht dargestellt.

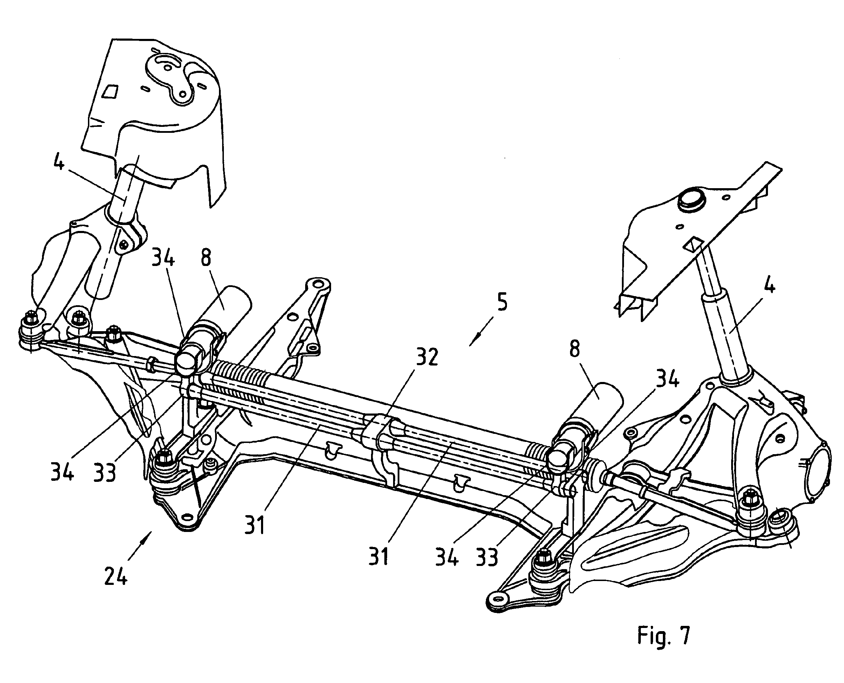

Fig. 7 zeigt eine dritte Variante zur Anordnung der Nehmereinrichtung 5, ebenfalls für ein McPherson - Fahrwerk. Ein - hier einteilig ausgeführter - Fahrschemel 24 trägt zwei parallel angeordnete Drehfedern 31, die mittig in einem Bock 32 drehfest eingespannt sind. Die freien Enden 33 der Drehfedern 31 sind über Hebel 34 mit Teleskopzylindern 8 so verbunden, dass eine Bewegung in einem Teleskopzylinder 8 zu einem gegensinnigen Verschwenken der Drehfedern 31 führt. Die Drehfedern 31 übernehmen in dieser Variante die Funktion der Tragfeder, und die Drehfedern 31 bilden zusammen mit den Hebeln 34 und den Teleskopzylindern 8 die Nehmereinrichtungen 5. Die hydraulischen Leitungen 7 (siehe Fig. 1) zwischen den Gebereinrichtungen 4 und den korrespondierenden Teleskopzylindern 34 sind nicht dargestellt.

### Bezugszeichenliste

- 1: Feder-Dämpfer-Einheit
- 2: Karosserie
- 3: Rad
- 4: hydraulische Gebereinrichtung
- 5: hydraulische Nehmereinrichtung
- 6: Regelanschluss
- 7: hydraulische Leitung
- 8: Teleskopzylinder
- 9: Druckraum
- 10: Tragfeder
- 11: Zusatzfeder
- 12: Zylinder
- 13: Kolben
- 14: hohle Kolbenstange
- 15: Lageraufnahme
- 16: Anschluss
- 17: gegenüberliegendes Ende der Gebereinrichtung
- 18: Dämpfungseinrichtung
- 19: Zylinder
- 20: Kolben
- 21: Druckraum
- 22: Dom
- 23: Radträger
- 24: Fahrschemel
- 25: Längsträger
- 26: Querträger
- 27: Lenkgetriebe
- 28: Trennwand
- 29: Verschlussplatte
- 30: Domstrebe
- 31: Drehfeder
- 32: Bock
- 33: freies Ende
- 34: Bypassbohrung
- 35: obere Kammer
- 36: zweite Nehmereinrichtung

## Patentansprüche

1. Feder-Dämpfer-Einheit für ein Fahrwerk eines Kraftfahrzeuges, mit
- einer hydraulischen Gebereinrichtung (4), die ein Rad (3) gegenüber einer Karosserie (2) des Fahrzeuges abstützt,
- einer hydraulischen Nehmereinrichtung (5), die außerhalb des Fahrwerkes im Kraftfahrzeug angeordnet und über hydraulische Leitungen (7) mit der Gebereinrichtung (4) verbunden ist, wobei
- die Nehmereinrichtung (5) durch eine Tragfeder (10) abgestützt ist, und wobei
- eine Dämpfungsvorrichtung (18) in der Gebereinrichtung (4) vorgesehen ist, **dadurch gekennzeichnet, dass** die Nehmereinrichtung (5) aus einem Teleskopzylinder (8) besteht, der außenseits die Tragfeder (10) trägt, wobei sich der Teleskopzylinder (8) und die Tragfeder (10) an der Innenseite eines Rahmens (28) abstützen.

2. Feder-Dämpfer-Einheit für ein Fahrwerk eines Kraftfahrzeuges, mit
- einer hydraulischen Gebereinrichtung (4), die ein Rad (3) gegenüber einer Karosserie (2) des Fahrzeuges abstützt,
- einer hydraulischen Nehmereinrichtung (5), die außerhalb des Fahrwerkes im Kraftfahrzeug angeordnet und über hydraulische Leitungen (7) mit der Gebereinrichtung (4) verbunden ist, wobei
- die Nehmereinrichtung (5) durch eine Tragfeder abgestützt ist, und wobei
- eine Dämpfungsvorrichtung (18) in der Gebereinrichtung (4) vorgesehen ist, **dadurch gekennzeichnet, dass** die Nehmereinrichtung (5) aus einem Teleskopzylinder (8) besteht, der über wenigstens eine Drehfeder (31), als Tragfeder, abgestützt ist.

3. Feder-Dämpfer-Einheit nach Anspruch 1 oder 2, **dadurch gekennzeichnet, dass** zusätzlich zur Tragfeder (10) eine Zusatzfeder (11) vorgesehen ist.

4. Feder-Dämpfer-Einheit nach Anspruch 3, **dadurch gekennzeichnet, dass** die Zusatzfeder (11) in Reihe zur Tragfeder (10) angeordnet ist.

5. Feder-Dämpfer-Einheit nach Anspruch 3, **dadurch gekennzeichnet, dass** die Zusatzfeder (11) parallel zur Tragfeder (10) vorgesehen ist.

6. Feder-Dämpfer-Einheit nach Anspruch 5, **dadurch gekennzeichnet, dass** die Zusatzfeder (11) auf eine Hydraulikflüssigkeit wirkt und an der Gebereinrichtung (4) oder der hydraulischen Leitung (7) vorgesehen ist.

7. Feder-Dämpfer-Einheit nach einem der vorstehenden Ansprüche, **dadurch gekennzeichnet, dass** die Nehmereinrichtung (5) in ein Fahrzeugbauteil (24, 30) integriert ist.

8. Feder-Dämpfer-Einheit nach Anspruch 7, **dadurch gekennzeichnet, dass** das Fahrzeugbauteil ein Träger (26) des Fahrzeuges ist.

9. Feder-Dämpfer-Einheit nach Anspruch 7, **dadurch gekennzeichnet, dass** das Fahrzeugbauteil eine Strebe (30) des Fahrzeuges ist.

10. Feder-Dämpfer-Einheit nach einem der vorstehenden Ansprüche, **dadurch gekennzeichnet, dass** die Gebereinrichtung (4) aus einem Zylinder (12) besteht, in dem ein Kolben (13) und eine mit dem Kolben verbundene hohle Kolbenstange (14) geführt sind, wobei im Kolben eine hydraulische Dämpfungseinrichtung (18) vorgesehen ist.

11. Feder-Dämpfer-Einheit nach Anspruch 10, **dadurch gekennzeichnet, dass** ein Strömungsquerschnitt der hohlen Kolbenstange (14) weniger als die Hälfte des Querschnittes des Zylinder (12) beträgt.

12. Feder-Dämpfer-Einheit nach einem der vorstehenden Ansprüche, **dadurch gekennzeichnet, dass** eine zweite Nehmereinrichtung (36) vorgesehen ist, die aus einem Zylinder (19) besteht, in dem durch einen Kolben (20) ein Druckraum (21) gebildet ist, wobei der Kolben (20) an seiner dem Druckraum (21) gegenüberliegenden Seite durch die Feder (11) abgestützt ist.

## Claims

1. Spring and damper unit for a chassis of an automotive vehicle, having
- a hydraulic master device (4) which supports a wheel (3) with respect to a body (2) of the vehicle,
- a hydraulic slave device (5) which is arranged outside the chassis in the automotive vehicle and which is connected to the master device (4) by means of hydraulic lines (7),
- with the slave device (5) being supported by means of a bearing spring (10), and
- with a damping device (18) being provided in the master device (4), **characterized in that** the slave device (5) is composed of a telescopic cylinder (8) which, on the outside, supports the bearing spring (10), with the telescopic cylinder (8) and the bearing spring (10) being supported on the inner side of a frame (28).

2. Spring and damper unit for a chassis of an automotive vehicle, having
- a hydraulic master device (4) which supports a wheel (3) with respect to a body (2) of the vehicle,
- a hydraulic slave device (5) which is arranged outside the chassis in the automotive vehicle and which is connected to the master device (4) by means of hydraulic lines (7),
- with the slave device (5) being supported by means of a bearing spring, and
- with a damping device (18) being provided in the master device (4), **characterized in that** the slave device (5) is composed of a telescopic cylinder (8) which is supported by means of at least one torsion spring (31) as a bearing spring.

3. Spring and damper unit according to Claim 1 or 2, **characterized in that** an auxiliary spring (11) is provided in addition to the bearing spring (10).

4. Spring and damper unit according to Claim 3,
**characterized in that** the auxiliary spring (11) is arranged in series with the bearing spring (10).

5. Spring and damper unit according to Claim 3,
**characterized in that** the auxiliary spring (11) is provided in parallel with the bearing spring (10).

6. Spring and damper unit according to Claim 5,
**characterized in that** the auxiliary spring (11) acts on a hydraulic liquid and is provided on the master device (4) or on the hydraulic line (7).

7. Spring and damper unit according to one of the preceding claims, **characterized in that** the slave device (5) is integrated into a vehicle component (24, 30).

8. Spring and damper unit according to Claim 7,
**characterized in that** the vehicle component is a beam (26) of the vehicle.

9. Spring and damper unit according to Claim 7,
**characterized in that** the vehicle component is a strut (30) of the vehicle.

10. Spring and damper unit according to one of the preceding claims, **characterized in that** the master device (4) is composed of a cylinder (12) in which are guided a piston (13) and a hollow piston rod (14) which is connected to the piston, with a hydraulic damping device (18) being provided in the piston.

11. Spring and damper unit according to Claim 10, **characterized in that** a flow cross section of the hollow piston rod (14) is smaller than half of the cross section of the cylinder (12).

12. Spring and damper unit according to one of the preceding claims, **characterized in that** a second slave device (36) is provided which is composed of a cylinder (19) in which a pressure chamber (21) is formed by means of a piston (20), with the piston (20) being supported, at its side opposite the pressure chamber (21), by the spring (11).

## Revendications

1. Unité de ressort-amortisseur pour un châssis de véhicule automobile, comprenant :
- un dispositif donneur hydraulique (4) qui supporte une roue (3) par rapport à une carrosserie (2) du véhicule,
- un dispositif récepteur hydraulique (5) qui est disposé en dehors du châssis dans le véhicule automobile et qui est connecté au dispositif donneur (4) par le biais de conduites hydrauliques (7),
- le dispositif récepteur (5) étant supporté par un ressort porteur (10) et
- un dispositif d'amortissement (18) étant prévu dans le dispositif donneur (4), **caractérisée en ce que** le dispositif récepteur (5) se compose d'un cylindre télescopique (8) qui porte, du côté extérieur, le ressort porteur (10), le cylindre télescopique (8) et le ressort porteur (10) s'appuyant sur le côté intérieur d'un cadre (28).

2. Unité de ressort-amortisseur pour un châssis de véhicule automobile, comprenant .
- un dispositif donneur hydraulique (4) qui supporte une roue (3) par rapport à une carrosserie (2) du véhicule,
- un dispositif récepteur hydraulique (5) qui est disposé en dehors du châssis dans le véhicule automobile et qui est connecté au dispositif donneur (4) par le biais de conduites hydrauliques (7),
- le dispositif récepteur (5) étant supporté par un ressort porteur (10) et
- un dispositif d'amortissement (18) étant prévu dans le dispositif donneur (4), **caractérisée en ce que** le dispositif récepteur (5) se compose d'un cylindre télescopique (8) qui est supporté par le biais d'au moins un ressort de torsion (31), en tant que ressort porteur.

3. Unité de ressort-amortisseur selon la revendication 1 ou 2, **caractérisée en ce que** l'on prévoit en plus du ressort porteur (10) un ressort supplémentaire (11).

4. Unité de ressort-amortisseur selon la revendication 3, **caractérisée en ce que** le ressort supplémentaire (11) est disposé en série par rapport au ressort porteur (10).

5. Unité de ressort-amortisseur selon la revendication 3, **caractérisée en ce que** le ressort supplémentaire (11) est prévu en parallèle par rapport au ressort porteur (10).

6. Unité de ressort-amortisseur selon la revendication 5, **caractérisée en ce que** le ressort supplémentaire (11) agit sur un liquide hydraulique et est prévu sur le dispositif donneur (4) ou la conduite hydraulique (7).

7. Unité de ressort-amortisseur selon l'une quelconque des revendications précédentes, **caractérisée en ce que** le dispositif récepteur (5) est intégré dans un composant du véhicule (24, 30).

8. Unité de ressort-amortisseur selon la revendication 7, **caractérisée en ce que** le composant du véhicule est un support (26) du véhicule.

9. Unité de ressort-amortisseur selon la revendication 7, **caractérisée en ce que** le composant du véhicule est un montant (30) du véhicule.

10. Unité de ressort-amortisseur selon l'une quelconque des revendications précédentes, **caractérisée en ce que** le dispositif donneur (4) se compose d'un cylindre (12) dans lequel sont guidés un piston (13) et une tige de piston (14) creuse connectée au piston, un dispositif d'amortissement hydraulique (18) étant prévu dans le piston.

11. Unité de ressort-amortisseur selon la revendication 10, **caractérisée en ce qu'**une section transversale d'écoulement de la tige de piston creuse (14) est inférieure à la moitié de la section transversale du cylindre (12).

12. Unité de ressort-amortisseur selon l'une quelconque des revendications précédentes, **caractérisée en ce que** l'on prévoit un deuxième dispositif récepteur (36) qui se compose d'un cylindre (19) dans lequel est formé un espace de pression (21) par un piston (20), le piston (20) étant supporté par le ressort (11) au niveau de son côté opposé à l'espace de pression (21).
